# EUROPEAN PATENT APPLICATION

(11) **EP 1 217 551 A2**
(43) Date of publication of application: **26.06.2002**
(21) Application number: 01130822.8
(22) Date of filing: 24.12.2001
(51) Int. Cl.: G06F 17/30

(54) **Managing a layered hierarchical data set**

(30) Priority: 22.12.2000 US 747428
(71) Applicant: SUN MICROSYSTEMS, INC., Palo Alto, California 94303 (US)
(72) Inventor: Vaidya, Neelam N., Cupertino, California 95014 (US); Barfurth, Joerg, 21723 Hollern-Twielenfleth (DE); Grobler, Dirk, 24534 Neumünster (DE); Chakraborty, Krishnendu, San Mateo, California 94403 (US)
(74) Representative: HOFFMANN - EITLE

(57) **Abstract**

The present invention relates to managing a layered hierarchical data set. According to one or more embodiments of the present invention, a hierarchical data set has a state attribute associated with each data element in the hierarchy. When a user accesses data element in the hierarchical data set, a sub-tree of the hierarchical data is presented to the user. When the user operates on a data element, the state attribute of the node associated with the data element is updated. Using the updated state attribute, the entire hierarchical data set is managed so that when a user accesses the data again, it is presented correctly.

## Description

### BACKGROUND OF THE INVENTION

### FIELD OF THE INVENTION

The present invention relates to a managing of layered hierarchical data.

Portions of the disclosure of this patent document contains material that is subject to copyright protection. The copyright owner has no objection to the facsimile reproduction by anyone of the patent document or the patent disclosure as it appears in the Patent and Trademark Office file or records, but otherwise reserves all rights whatsoever.

### BACKGROUND ART

In modern computing data is often stored in a database hierarchically. Examples of the manners in which data is stored hierarchically includes, for instance, in a tree, in a relational database, in a network file system, and in various other ways as well. Due to the nature of hierarchically organized information, user changes to some of the hierarchical information can affect data throughout the hierarchy. Currently, as will be further explained below, there is no effective way to easily manage all of the affected information in the hierarchy.

Before further discussing the drawbacks associated with modifying hierarchically stored information, one example of an environment where this problem occurs is described below.

### Enterprise Environment

In an enterprise environment there are hierarchical levels of administrators and users. In such an environment, it is typical to have layers of configured data roughly corresponding to the organizational layout of the enterprise. Configured data may be categorized under system policies, application profiles, and user profiles.

### System Policies

Data that describes the overall organizational system policies and configurations is functionally hierarchical. Typical kinds of data under this category may include an employee's role within the enterprise, privileges assigned to and system resources available to employees based on their roles, applications (or components thereof) available to employees based on their roles, platform related resources and limitations, and domain based network and server settings (for example, proxy server, Internet message access protocol (IMAP) server, calendar server, news server, etc.).

This data is usually modified by an administrator or administrator class, and can often only be accessed by other employees in a read only format. This data is neither user nor application specific, but rather it is data that describes the policies and configuration of the entire enterprise.

### Application Profiles

This kind of data describes an application environment and components (startup information, user interface (UI) components, libraries, resources needed, etc.) System default data is defined before the application is deployed. Depending on the organizational structure, a domain or group administrator may override the system defaults and set data values for their sub-organization. A user then may decide to override these default values with his/her own values. Each category of data may consist of one or more such layers. Usually these kinds of data are stored on external secure storage mediums like a relational database management system (RDBMS) or a lightweight directory access protocol (LDAP).

### User Profiles

User profiles are data typically specific to the domain to which users belong to and is not application specific. It defines the identity of the user within an organization. Initially set by an administrator or administrator class, it may be partially accessible to the employee that it describes. This data may be partially read only, and may typically be modified by user, group administrator or system administrator. Typical kinds of data under this category for each user may include, for instance, login information, passwords/certificates for certain applications, user environment which includes hardware/software settings, printer settings, language preference, etc., network and server settings which include name server, IMAP server, and calendar server to use, Internet Service Provider (ISP), point-to-point protocol (PPP), domain name system (DNS), and dynamic host configuration protocol (DHCP) settings to use, user policies regarding personal data and resources, including who can access personal data, what kind of access, personal settings like bookmarks for a web browser, alias definitions, and user application preferences from a group of similar types of available applications (for example, Outlook Express rather than Netscape Messenger to read email).

These categories of data are typically spread among the different organizational layers dictated by the system policies. For an enterprise environment, these layers may be system default layer, domain default layer, group default layer, user layer, etc.

### System Default Layer

This is data that comes with the product installation (factory default values) set by the product development team showing most common values. These values may change in the future for different versions of the product, or the operating system being used.

### Group Default Layer

Depending on the organizational layout, the administrator may define different groups according to the responsibilities and roles of its employees. For example, a software company may have groups like engineering, quality assurance, release engineering, and administrative staff. Depending on the needs of the employees in a group, a group administrator may decide to set default values or add new ones by setting them to appropriate values for the users of the group. These new values override the system default values mentioned earlier.

### User Layer

Often users have the luxury of defining their own values of configurable data which will override the group and system default layer values. For instance, in a registry server, data relating to the users preferences may be hierarchically stored. This might include, for instance, the user's preferred printer or the fonts the user prefers. Once a user is added to a "tree" of other users, the user typically can add new sub-nodes with their own set of user defined values.

### Need For Data Layering

In enterprise environments, organizations are typically divided into hierarchical units like divisions, geographical domains, departments, etc. Employees belong to a unit which in turn makes up other units. Typically the relationship between the different units defines how the configured data for each employee is defined. The need for such layering is proven to be essential for most desktop environments like Solaris, Linux, and Windows NT, because it not only organizes the various divisions in an enterprise system, but also allows the employees to access data and system resources depending on their position in the layers.

In order to manage this configured data properly, the data should follow the organizational layout and also be defined in different layers that may override each other. For example, applications may come installed with system default data. The administrator for a division/domain or department may decide to override this default data and set preference data for the users depending on their roles and responsibilities. The users may further override the data set by the administrator with their own data.

### Current Schemes

When a user or client application changes this data, the user does not necessarily know which layer the data is coming from nor is it preferable to know what layer the data is coming from. For instance, if a user has a mailbox that is set in a group layer as a default called "my documents", and the user wishes to change the location of the mailbox to a new location which is also called "my documents" then, the server must remember that the user's layer only replaces the mailbox location while the group layer's default location for other users remains the same. This means that two versions remain. The data in the group location has not changed. This can lead to improper operations due to the data conflict.

One scheme comprises a client side analysis of all nodes in the hierarchy to determine what defaults have been overridden each time data in the hierarchy is accessed. This scheme, however, adds tremendous complexity to the client side and adds additional latency because each time a user accesses the hierarchical data, a complete analysis of the entire hierarchy is performed.

### SUMMARY OF THE INVENTION

It is an object of the invention to improved managing of a layered hierarchical data set.

This object of the invention is solved by a method for managing a plurality of nodes in a hierarchically organized database stored in a server on a computer network comprising: accessing a subset of said nodes in response to a client request; using said subset wherein one or more state attributes associated with said nodes are modified in response to said client request; and managing said nodes using said state attributes.

Advantageously the state attributes may indicate that a corresponding data element should be updated and/or deleted and/or added.

Further, the nodes may be organized using a Document Object Model format.

Further, the object of the invention is solved by a manager for one or more nodes in a hierarchically organized database stored in a server on a computer network comprising: a subset of said nodes configured to be accessed in response to a user request; one or more state attributes associated with said nodes configured to be modified in response to said client request when said subset is used; and a manager configured to manage said nodes using said state attributes.

Further, the object of the invention is solved by a computer program product comprising: a computer usable medium having computer readable program code embodied therein configured to manage a plurality of nodes in a hierarchically organized database stored in a server on a computer network computer readable code configured to cause a computer to access a subset of said nodes in response to a client request; computer readable code configured to cause a computer to use said subset wherein one or more state attributes associated with said nodes are modified in response to said client request; and computer readable code configured to cause a computer to manage said nodes using said state attributes.

Further, the object of the invention is solved by an apparatus comprising: a subset of one or more nodes configured to be accessed in response to a client request wherein said subset is used wherein one or more state attributes associated with said nodes are modified in response to said client request; and a manager configured to manage said nodes using said state attributes.

The present invention relates to managing a layered hierarchical data set. According to one or more embodiments of the present invention, a hierarchical set of nodes has a state attribute associated with each data element in the node. When a user accesses data element in the hierarchical data set, a subset of the hierarchical data is presented to the user. When the user operates on the data, the state attribute associated with the data element is updated. Using the updated state attributes, the entire hierarchical data set is managed so that when a user accesses the data again, it is presented correctly.

In one embodiment a function called "updateNode" manages the data coming from any layer in the hierarchical set via a state attribute which describes the last action taken on the data element, including for instance added, deleted, modified, or replaced. The updateNode function is independent of the number of layers of data defined by the administrator, and is also independent of the configuration data layout or hierarchy. As a result, it can support any arbitrary configuration of data that is organized hierarchically.

In one or more embodiments of the present invention the updateNode function accomplishes a variety of changes, including overriding default values from the administrator's tree, resetting the overridden value back to the default, updating the default value in the administrator's tree, adding a new data or nodes to the user's sub-tree, and updating values of pre-existing nodes.

In another embodiment, all profile and configuration (including system policies and user profiles) files are in eXtensible Markup Language (XML) format. These files may be either provided by the vendors in XML format, or may be created, for instance, through an import utility. In another embodiment, system policies and user profile information may be external for users of an enterprise environment, and may be already available on secure storage mediums like RDBMS or LDAP. The present algorithm is able to integrate use of this pre-existing information with minimum difficulty. This pre-existing information may be modified by other applications not on the server, and therefore is refreshed in the cache of the enterprise environment.

In order to keep track of data modified by various clients, another embodiment of the present invention has the data as a single Document Object Model (DOM) tree. When an user asks for the data, the user receives a merged tree view of the data. Therefore, the server has the responsibility of converging data into a merged tree, and converting the merged tree transactions to the actual tree on the server. This is accomplished by examining the data elements in the hierarchy where the associated state attribute is no longer in a default state and presenting the data elements associated with the non-default state attribute and their parent nodes, continuing up to the root of the tree. Then, merging any changes made on the sub-tree back to the complete tree by updating the state elements.

### BRIEF DESCRIPTION OF THE DRAWINGS

These and other features, aspects and advantages of the present invention will become better understood with regard to the following description, appended claims and accompanying drawings where:
- Fig. 1: is a flowchart showing management of a hierarchical data set according to an embodiment of the present invention.
- Fig. 2: is a view of a DOM tree suitable for use with the present invention.
- Fig. 3: is a partial view of a DOM tree suitable for use with the present invention.
- Fig. 4: is a partial view of a DOM tree after an updateNode function is used according to an embodiment of the present invention.
- Fig. 5: is table showing the state value for a node during an updateNode operation according to an embodiment of the present invention.
- Fig. 6: is a flowchart showing an example of how an updateNode operation is used according to an embodiment of the present invention.
- Fig. 7: is a flowchart showing how state attributes are used to present a partial sub-tree to a user according to an embodiment of the present invention.
- Fig. 8: is a tree having state attributes associated with data elements according to an embodiment of the present invention.
- Fig. 9: is an embodiment of a computer execution environment.

### DETAILED DESCRIPTION OF THE INVENTION

Embodiments of the invention are for managing a layered hierarchical data set. In the following description, numerous specific details are set forth to provide a more thorough description of embodiments of the invention. It will be apparent, however, to one skilled in the art, that the invention may be practiced without these specific details. In other instances, well known features have not been described in detail so as not to obscure the invention.

### Hierarchical Data Set Management

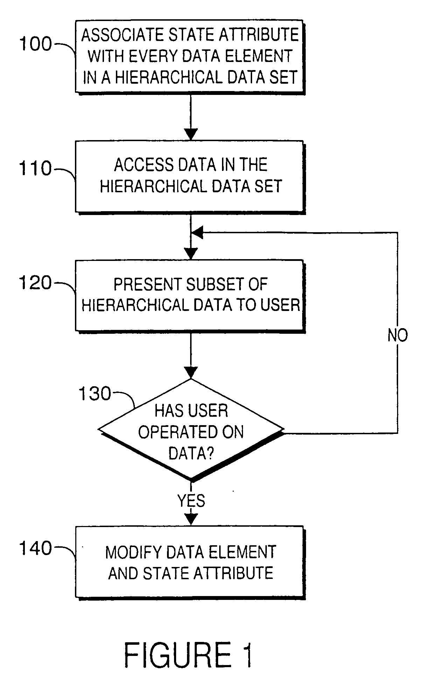

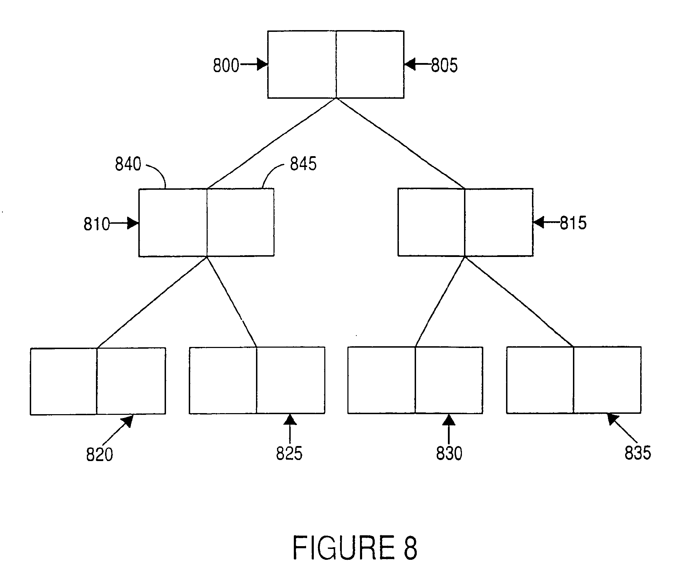

In one embodiment of the present invention, management of a hierarchical data set is performed as shown in Figure 1. At operation 100, a hierarchical data set has state attributes associated with data elements in each node. An example of a tree where state attributes are associated with data elements is shown in Figure 8. As shown in Figure 8, the tree 800 has multiple nodes labeled 805, 810, 815, 820, 825, 830, and 835. Each node is divided into a data element and a state attribute. Node 810 for instance, comprises data element 840 and state attribute 845.

Referring again to Figure 1, at operation 110 a user accesses data in the hierarchical data set. In response, a subset of the hierarchical data set (i.e., a sub-tree) is presented to the user at operation 120. Next, it is determined if the user has operated on a subset of the data at operation 130. If not, the process repeats at operation 120. Otherwise, the data and state attributes are modified at operation 140.

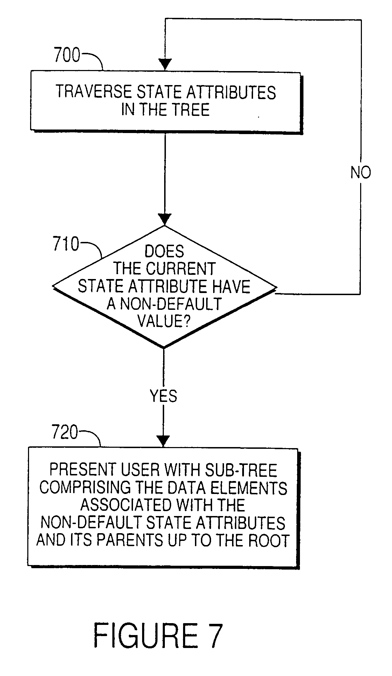

When a user again needs access to the hierarchical information, one embodiment of the present invention shown in Figure 7 presents it to the user in the following manner. At operation 700, the state attributes in the tree are traversed so that the appropriate information (i.e., nodes) may be presented to the user. Next, at operation 710 it is determined whether the present state attribute has a default value. If the state attribute does in fact have a default value then it has not been changed. Thus, the process repeats and other state attribute are examined at operations 700 and 710 to find one that is non-default.

When a non-default state attribute is encountered, the user is presented with a sub-tree at operation 720 where the data element associated with the non-default state attribute and all of its parents up to the root are presented as a sub-tree. If the user again changes a data element, then the process repeats where the associated state attribute is updated and such an update is propagated to the complete tree residing on the server.

### Data Elements in the Nodes

As described in XML specifications, there are two categories of nodes: non-leaf and leaf nodes, both of which can be one of the following types:
Group: all non-leaf nodes are by default of type Group, unless otherwise specified.
Set: both non-leaf and leaf nodes can be of type Set, and represent instances of templates.
Basic: All leaf nodes that are not Lists fall under this category, which include most basic types supported by XML schemas.
List: leaf nodes that are made up of an array of the basic type fall under this category.

A non-leaf node is one which has a branch of nodes (dependencies) under it, while a leaf node is one which has no dependencies. Only leaf nodes have values or a list of values, while, on the other hand, non-leaf nodes may be explicitly defined, for instance via a XML schema or can be derived from a XML schema template. All nodes can have one or more attribute, but each non-leaf node may have specific kinds of attributes, which include for instance, cfg:type, cfg:element_type, etc.

### State Attributes

According to one or more embodiments of the present invention state attributes are added to each node in the hierarchy, for instance in the manner shown in Figure 8. The state attribute has information relating to the last operation that was performed on its corresponding data element.

Possible values of the state attribute include:
Default: indicates that this node has come from the previous layer or the system default layer. This is the default value of the attribute.
Modified: indicates that the node in the current layer has a value different from the default value.
Deleted: indicates from the current layer's perspective that this node and all its sub-nodes are deleted (data does not exist).
Replaced: indicates that this node is not defined in the previous layers. The owner of the current layer has created this node, and another node with the same name may exist in another layer, but is replaced by this new node.

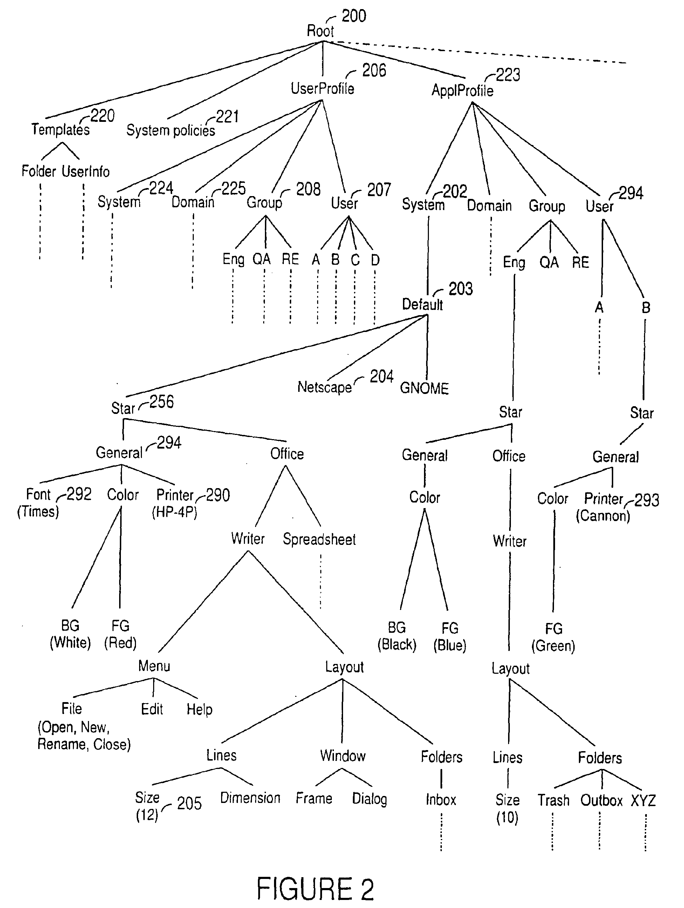

Depending on the value in the state attribute, different merged DOM trees are presented to the user. One example is shown in Figures 2-4.

### DOM Tree Example

Figure 2 shows data cached in a server as a DOM tree. For simplicity, the complete tree is not shown. Root 200 is a non-leaf node, while Size 205 is a leaf node. The DOM tree has non-leaf nodes, such as the categories that include Templates 220, System policies 221, User Profile 206, and ApplProfile 223, which are in the second topmost layer of this DOM tree (Root is the topmost layer).

User profile 206 and ApplProfile 223 are further subcategorized into 4 layers: System 224, Domain 225, Group 208, and User 207, which are in turn broken down into other layers, for instance default layer 203. Note that this DOM tree is but one example of a hierarchical layout, embodiments of the present invention are equally applicable to other hierarchies as well, including relational databases, binary trees, directed acyclical graphs, or any other hierarchical arrangement of data having any number of layers.

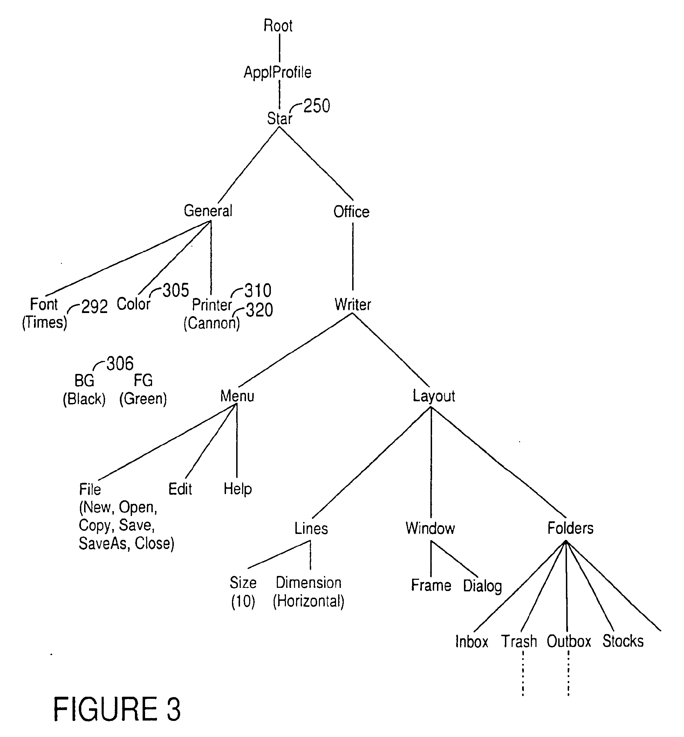

Typically, when a user asks for data, such as that found in a server with a hierarchical layout like that shown in Figure 2, the user receives a merged view of the data. Figure 3 is a merged view of the tree in Figure 2 which is what a user would operate on when they access Star application 250. Figure 3 is designed to show how a user might wish to change a preference in their layer and how this change should override the value in a node in the group or system layer.

As shown in Figure 3, system layer 202, and default layer 203 under ApplProfile layer 201 are missing from the merged view of the tree of Figure 2. The general node 294 for the system 202 indicates that the printer 290 should be HP. However, it can be seen in the merged tree of Figure 3 that the printer 310 has changed from HP-4P 290 in Figure 2 to Cannon 320 in Figure 3 since the user has changed printer 293 in their user layer 294 and this category is supposed to override the system layer. Similarly, background color (BG) 300 under the Color layer 305 has changed from white in Figure 2 to black in Figure 3.

### updateNode

One embodiment of the present invention converts the merged tree transactions to the actual tree on the server. In one embodiment, the function responsible for this is called updateNode, which may reside on a server, such as a Registry server. This function performs a variety of operations on the client side. These operations include, for instance:
Override value: change the default value to a new overridden value, or change an already overridden value to a new overridden value.
Delete: remove a default node, or delete a user defined node (one that does not exist in the default tree).
Reset: reset the node to a default value.
Add: add a new node to the user's sub-tree.
Replace: replace a default node with a new node with either the same name, or different name to the user's sub-tree.

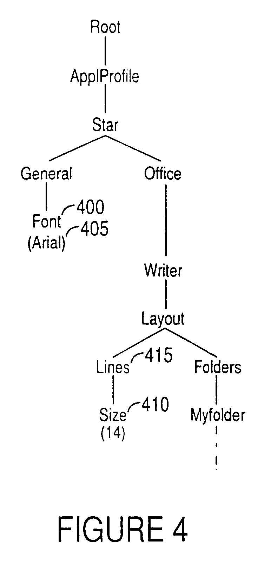

Figure 4 is a partial view of the DOM tree of Figures 2 and 3 where updateNode function has been used to change the Font layer 400 from Times 292 (in both Figures 2 and 3) to Arial 405, and the Size node 410 under Lines 415 has been changed from 12 in Figure 2 to 10 in Figure 3 to 14 in Figure 4.

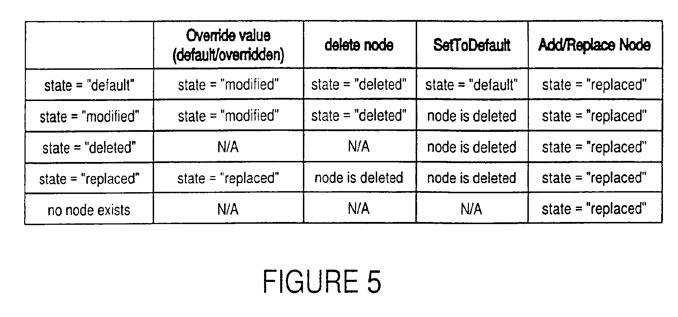

Figure 5 shows a table of how these operations are accomplished. The first column shows the state value for a node before the updateNode operation, while the first row shows the client actions taken. The other rows show the final state value of the node after the updateNode operation is successfully completed. According to another embodiment of the present invention, when each node undergoes an updateNode operation the server has to update the information in the cache, and has to relay the same information to the external storage media.

Therefore for each node undergoing the updateNode operation, if the state attribute associated with the node is default on server, the node is deleted from the user's sub-tree. If the state is modified on the server and if the node already exists in the user's sub-tree, then its value is modified. On the other hand, if the node does not exists, it is added to the user's sub-tree. If the state is deleted on the server, then if the node already exists and the state was "replaced", then the node is deleted. If the state of the node is "modified", then state is changed to "deleted". On the other hand, if the node does not exist (user was using the default value up to now), it is deleted using the addNode operation with the node's state attribute value set to "deleted". If the state is replaced on the server and if the node already exists, then it is replaced by the new node. On the other hand, if the node does not exist, it is added to the user's sub-tree.

The updateNode makes use of certain parameters to accomplish the various operations mentioned above. These are:
nodePath: this parameter is of type string and refers to the parent node under which all changes reside. Typically it represents the smallest node that contains the changes, and most often it is different from the nodePath given in the openNode function call. In fact, in most cases this nodePath will be a sub-node of the nodePath in openNode.
dom_node: this parameter is of type Node, and represents a stream of merged DOM sub-nodes.
username: this parameter is of type string and is an optional parameter. The specifications of this parameter are to be used by only the administrator in order to update other user'' nodes.

The above mentioned operations have a return value based on the result of the operation. "status" is a string that returns the success or failure of an operation, while "subNode" is a node that gives the current value of the given sub-node if the result of the operation is a failure, otherwise its value is zero (if the result of the operation is a success). The execution of these operations using the above mentioned parameters is accomplished using an input like nodeId, and an output like status.

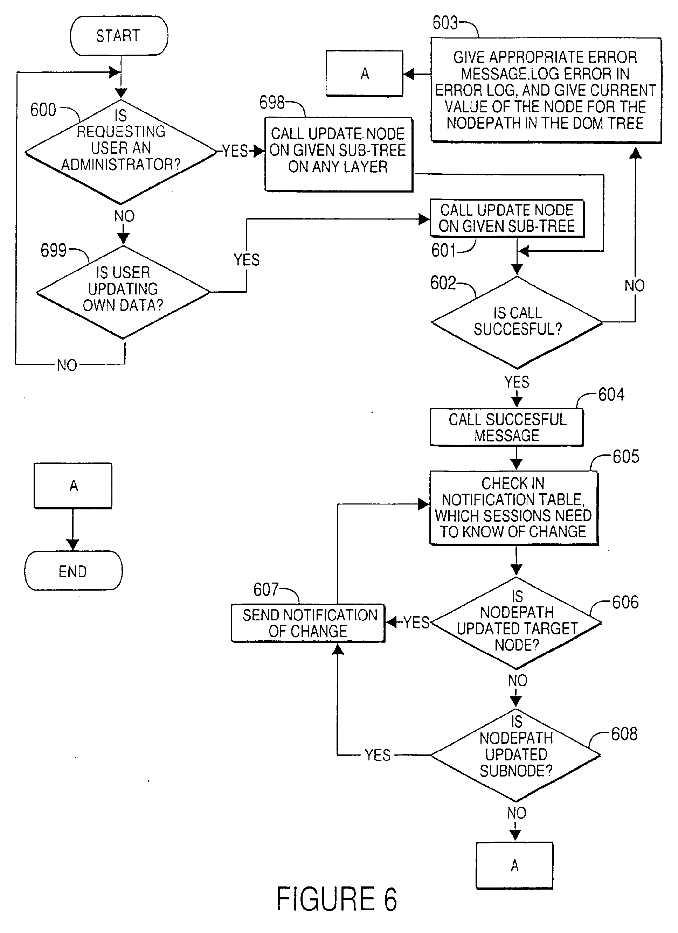

Figure 6 is a flowchart that illustrates an example where updateNode is used when an administrator or user asks for data belonging to a different user (the username parameter is known by the administrator). At operation 600 the updateNode ensures that the user asking for the request is an administrator. If the user is the administrator then at operation 698 updateNode is called on the sub-tree that represents the data the administrator needs on any layer. If the user is not an administrator, it is determined at step 699 whether is is a user. If not, the process repeats at step 600. Otherwise, at step 601, updateNode is called on a given sub-tree.

At operation 602 the call to the sub-tree is checked for success. If the call is a failure, then at operation 603 an appropriate error message is sent back (and optionally logged in an error log) along with the current value of the node for the nodePath in the DOM tree.

If on the other hand, the call is a success, then an appropriate success message is given at operation 604 after which, at operation 605, sessions that need to be notified about the changes are checked in a notificationTable. At operation 606 if the nodePath updated is the target node (i.e., the node representing the data the administrator wants), then at operation 607 the notification is sent. If on the other hand, the nodePath is not the target node, then at operation 608, it is checked to see if the nodePath updated is a sub-node of the nodePath in the notificationTable. If it is, then notification is given at operation 607. Otherwise, the process terminates.

In another embodiment, all profile and configuration files (including all files in system policies), and user profiles are in XML format. These files may be either provided directly by the vendor of the application, or may be created, for instance, using an import utility.

### Embodiment of Computer Execution Environment (Hardware)

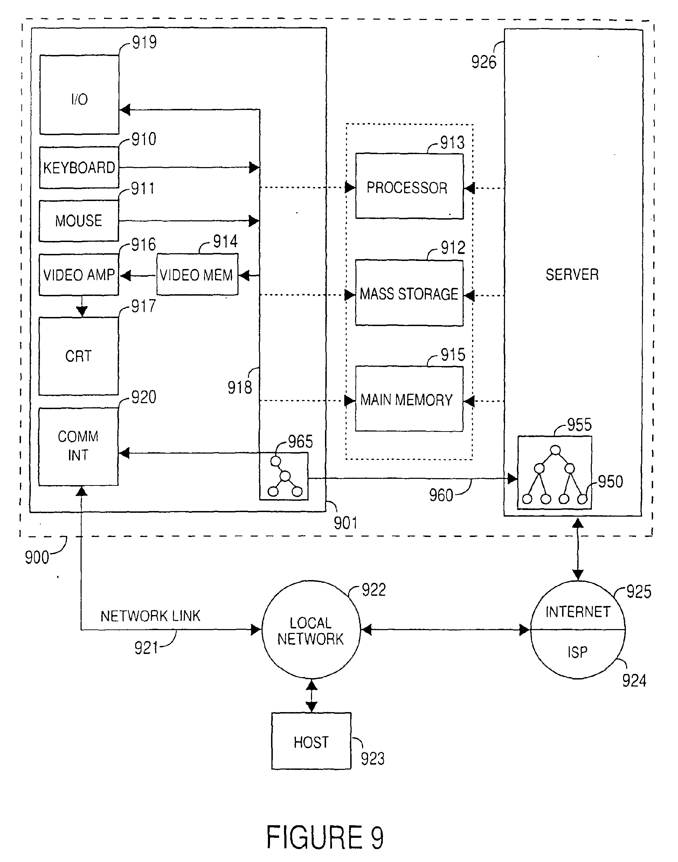

An embodiment of the invention can be implemented as computer software in the form of computer readable program code executed in a general purpose computing environment such as environment 900 illustrated in Figure 9, or in the form of bytecode class files executable within a Java™ run time environment running in such an environment, or in the form of bytecodes running on a processor (or devices enabled to process bytecodes) existing in a distributed environment (e.g., one or more processors on a network). A keyboard 910 and mouse 911 are coupled to a system bus 918. The keyboard and mouse are for introducing user input to the computer system and communicating that user input to central processing unit (CPU) 913. Other suitable input devices may be used in addition to, or in place of, the mouse 911 and keyboard 910. I/O (input/output) unit 919 coupled to bi-directional system bus 918 represents such I/O elements as a printer, A/V (audio/video) I/O, etc.

Computer 901 may include a communication interface 920 coupled to bus 918. Communication interface 920 provides a two-way data communication coupling via a network link 921 to a local network 922. For example, if communication interface 920 is an integrated services digital network (ISDN) card or a modem, communication interface 920 provides a data communication connection to the corresponding type of telephone line, which comprises part of network link 921. If communication interface 920 is a local area network (LAN) card, communication interface 920 provides a data communication connection via network link 921 to a compatible LAN. Wireless links are also possible. In any such implementation, communication interface 920 sends and receives electrical, electromagnetic or optical signals which carry digital data streams representing various types of information.

Network link 921 typically provides data communication through one or more networks to other data devices. For example, network link 921 may provide a connection through local network 922 to local server computer 923 or to data equipment operated by ISP 924. ISP 924 in turn provides data communication services through the world wide packet data communication network now commonly referred to as the "Internet" 925. Local network 922 and Internet 925 both use electrical, electromagnetic or optical signals which carry digital data streams. The signals through the various networks and the signals on network link 921 and through communication interface 920, which carry the digital data to and from computer 900, are exemplary forms of carrier waves transporting the information.

Processor 913 may reside wholly on client computer 901 or wholly on server 926 or processor 913 may have its computational power distributed between computer 901 and server 926. Server 926 symbolically is represented in Figure 9 as one unit, but server 926 can also be distributed between multiple "tiers". In one embodiment, server 926 comprises a middle and back tier where application logic executes in the middle tier and persistent data is obtained in the back tier.

With reference to embodiments of the present invention, hierarchically organized information 950 typically resides in the back tier in a database 955, while the data is typically accessed by client computer 901. In operation, client computer 901 makes a request 960, to the database 955 for the hierarchically organized information 950. The request 960 is then used to present the user with an appropriate tree by accessing the database 955 and locating the proper nodes in the hierarchical information 960 to re-create a sub-tree 965 on the client computer 901.

Computer 901 includes a video memory 914, main memory 915 and mass storage 912, all coupled to bi-directional system bus 918 along with keyboard 910, mouse 911 and processor 913. As with processor 913, in various computing environments, main memory 915 and mass storage 912, can reside wholly on server 926 or computer 901, or they may be distributed between the two. Examples of systems where processor 913, main memory 915, and mass storage 912 are distributed between computer 901 and server 926 include the thin-client computing architecture developed by Sun Microsystems, Inc., the palm pilot computing device and other personal digital assistants, Internet ready cellular phones and other Internet computing devices, and in platform independent computing environments, such as those which utilize the Java technologies also developed by Sun Microsystems, Inc.

The mass storage 912 may include both fixed and removable media, such as magnetic, optical or magnetic optical storage systems or any other available mass storage technology. Bus 918 may contain, for example, thirty-two address lines for addressing video memory 914 or main memory 915. The system bus 918 also includes, for example, a 32-bit data bus for transferring data between and among the components, such as processor 913, main memory 915, video memory 914 and mass storage 912. Alternatively, multiplex data/address lines may be used instead of separate data and address lines.

In one embodiment of the invention, the processor 913 is a microprocessor manufactured by Motorola, such as the 680X0 processor or a microprocessor manufactured by Intel, such as the 80X86, or Pentium processor, or a SPARC microprocessor from Sun Microsystems, Inc. However, any other suitable microprocessor or microcomputer may be utilized. Main memory 915 is comprised of dynamic random access memory (DRAM). Video memory 914 is a dual-ported video random access memory. One port of the video memory 914 is coupled to video amplifier 916. The video amplifier 916 is used to drive the cathode ray tube (CRT) raster monitor 917. Video amplifier 916 is well known in the art and may be implemented by any suitable apparatus. This circuitry converts pixel data stored in video memory 914 to a raster signal suitable for use by monitor 917. Monitor 917 is a type of monitor suitable for displaying graphic images.

Computer 901 can send messages and receive data, including program code, through the network(s), network link 921, and communication interface 920. In the Internet example, remote server computer 926 might transmit a requested code for an application program through Internet 925, ISP 924, local network 922 and communication interface 920. The received code may be executed by processor 913 as it is received, and/or stored in mass storage 912, or other non-volatile storage for later execution. In this manner, computer 900 may obtain application code in the form of a carrier wave. Alternatively, remote server computer 926 may execute applications using processor 913, and utilize mass storage 912, and/or video memory 915. The results of the execution at server 926 are then transmitted through Internet 925, ISP 924, local network 922 and communication interface 920. In this example, computer 901 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.
The computer systems described above are for purposes of example only. An embodiment of the invention may be implemented in any type of computer system or programming or processing environment.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

Thus, the management of a layered hierarchical data set is described in conjunction with one or more specific embodiments. The invention is defined by the following claims and their full scope of equivalents.

## Claims

1. A method for managing a plurality of nodes in a hierarchically organized database stored in a server on a computer network comprising:
accessing a subset of said nodes in response to a client request;
using said subset wherein one or more state attributes associated with said nodes are modified in response to said client request; and
managing said nodes using said state attributes.

2. The method of claim 1 wherein said state attributes indicate that a corresponding data element should be updated.

3. The method of at least one of the claims 1 and 2 wherein said state attributes indicate that a corresponding data element should be deleted.

4. The method of at least one of the claims 1 to 3 wherein said state attributes indicate that a corresponding data element should be added.

5. The method of at least one of the claims 1 to 3 wherein said nodes are organized using a Document Object Model format.

6. A manager for one or more nodes in a hierarchically organized database stored in a server on a computer network comprising:
a subset of said nodes configured to be accessed in response to a user request;
one or more state attributes associated with said nodes configured to be modified in response to said client request when said subset is used; and
a manager configured to manage said nodes using said state attributes.

7. The manager of claim 6 wherein said state attributes indicate that a corresponding data element should be updated.

8. The manager of at least one of the claims 6 and 7 wherein said state attributes indicate that a corresponding data element should be deleted.

9. The manager of at least one of the claims 6 to 8 wherein said state attributes indicate that a corresponding data element should be added.

10. The manager of at least one of the claims 6 to 9 wherein said nodes are organized using a DOM format.

11. A computer program product comprising:
a computer usable medium having computer readable program code embodied therein configured to manage a plurality of nodes in a hierarchically organized database stored in a server on a computer network
computer readable code configured to cause a computer to access a subset of said nodes in response to a client request;
computer readable code configured to cause a computer to use said subset wherein one or more state attributes associated with said nodes are modified in response to said client request; and
computer readable code configured to cause a computer to manage said nodes using said state attributes.

12. The computer program product of claim 11 wherein said state attributes indicate that a corresponding data element should be updated.

13. The computer program product of at least one of the claims 11 and 12 wherein said state attributes indicate that a corresponding data element should be deleted.

14. The computer program product of at least one of the claims 11 to 13 wherein said state attributes indicate that a corresponding data element should be added.

15. The computer program product of at least one of the claims 11 to 14 wherein said data nodes are organized using a DOM format.

16. A program having instructions adapted to make a computer carry out the method of at least one of the claims 1 - 5.

17. A computer readable medium, in which a program is embodied, where the program is to make a computer execute the method of at least one of the claims 1 - 5.

18. An apparatus comprising:
a subset of one or more nodes configured to be accessed in response to a client request wherein said subset is used wherein one or more state attributes associated with said nodes are modified in response to said client request; and
a manager configured to manage said nodes using said state attributes.

19. The apparatus of claim 18 wherein said state attributes indicate that a corresponding data element should be updated.

20. The apparatus of at least one of the claims 18 and 19 wherein said state attributes indicate that a corresponding data element should be deleted.

21. The apparatus of at least one of the claims 18 to 20 wherein said state attributes indicate that a corresponding data element should be added.

22. The apparatus of at least one of the claims 18 to 21 wherein said data nodes are organized in a DOM format.
